# EUROPEAN PATENT SPECIFICATION

(11) **EP 2 393 862 B1**
(45) Date of publication and mention of the grant of the patent: **15.08.2018**
(21) Application number: 10702006.7
(22) Date of filing: 29.01.2010
(51) Int. Cl.: C08G 18/48, C08G 18/76, C08J 9/14, C08G 18/50, C08G 18/40, C08G 101/00

(54) **FOAM-FORMING COMPOSITIONS CONTAINING MIXTURES OF CIS-1,1,1,4,4,4-HEXAFLUORO-2-BUTENE AND 1,1,1,3,3-PENTAFLUOROPROPANE AND THEIR USES IN THE PREPARATION OF POLYISOCYANATE-BASED FOAMS**
SCHAUMBILDENDE ZUSAMMENSETZUNGEN MIT MISCHUNGEN AUS CIS-1,1,1,4,4,4-HEXAFLUOR-2-BUTEN UND 1,1,1,3,3-PENTAFLUORPROPAN UND IHRE VERWENDUNG BEI DER HERSTELLUNG VON SCHAUMSTOFFEN AUF POLYISOCYANAT-BASIS
COMPOSITIONS FORMANT UNE MOUSSE CONTENANT DES MÉLANGES DE CIS-1,1,1,4,4,4-HEXAFLUORO-2-BUTÈNE ET DE 1,1,1,3,3-PENTAFLUOROPROPANE ET LEURS UTILISATIONS DANS LA PRÉPARATION DE MOUSSES À BASE DE POLYISOCYANATE

(30) Priority: 03.02.2009 US 149473 P
(43) Date of publication of application: 14.12.2011
(73) Proprietor: The Chemours Company FC, LLC, Wilmington DE 19801 (US)
(72) Inventor: LOH, Gary, Newark Delaware 19702 (US); CREAZZO, Joseph, Anthony, Wilmington Delaware 19810 (US)
(74) Representative: Morf, Jan Stefan
(86) International application number: PCT/US2010/022506
(87) International publication number: WO 2010/090951

(56) References cited:
- WO-A2-2008/134061
- WO-A2-2009/085857
- JP-A- 5 179 043

## Description

### FIELD OF THE INVENTION

The disclosure herein relates to foam-forming compositions comprising a mixture of cis-1,1,1,4,4,4-hexafluoro-2-butene and 1,1,1,3,3-pentafluoropropane and an active hydrogen-containing compound, and using such compositions for producing polyurethane and polyisocyanurate foams.

### BACKGROUND OF THE INVENTION

Closed-cell polyisocyanate-based foams are widely used for insulation purposes, for example, in building construction and in the manufacture of energy efficient electrical appliances. In the construction industry, polyurethane/polyisocyanurate board stock is used in roofing and siding for its insulation and load-carrying capabilities. Poured and sprayed polyurethane foams are widely used for a variety of applications including insulating roofs, insulating large structures such as storage tanks, insulating appliances such as refrigerators and freezers, insulating refrigerated trucks and railcars, etc.

All of these various types of polyurethane/polyisocyanurate foams require blowing agents (also known as foam expansion agents or foam expansion compositions) for their manufacture. Insulating foams depend on the use of halocarbon blowing agents, not only to foam the polymer, but primarily for their low vapor thermal conductivity, a very important characteristic for insulation value. Historically, polyurethane foams used CFCs (chlorofluorocarbons, for example CFC-11, trichlorofluoromethane) and HCFCs (hydrochlorofluorocarbons, for example HCFC-141b, 1,1-dichloro-1-fluoroethane) as the primary blowing agent. However, due to the implication of chlorine-containing molecules such as the CFCs and HCFCs in the destruction of stratospheric ozone, the production and use of CFCs and HCFCs has been restricted by the Montreal Protocol. More recently, hydrofluorocarbons (HFCs), which do not contribute to the destruction of stratospheric ozone, have been employed as blowing agents for polyurethane foams. An example of an HFC employed in this application is HFC-245fa (1,1,1,3,3-pentafluoropropane). The HFCs do not contribute to the destruction of stratospheric ozone, but are of concern due to their contribution to the "greenhouse effect", i.e., they contribute to global warming. As a result of their contribution to global warming, the HFCs have come under scrutiny, and their widespread use may also be limited in the future.

Hydrocarbons have also been proposed as foam blowing agents. However, these compounds are flammable, and many are photochemically reactive, and as a result contribute to the production of ground level ozone (i.e., smog). Such compounds are typically referred to as volatile organic compounds (VOCs), and are subject to environmental regulations.

Japanese Patent No. 05179043 discloses and attempts to use cis-1,1,1,4,4,4-hexafluoro-2-butene as the blowing agent for polyurethane foams.

### SUMMARY OF THE INVENTION

This disclosure provides a foam-forming composition comprising: (a) a mixture of cis-1,1,1,4,4,4-hexafluoro-2-butene and 1,1,1,3,3-pentafluoropropane; and (b) an active hydrogen-containing compound having two or more active hydrogens, wherein the mixture contains 25 to 95 wt% of cis-1,1,1,4,4,4-hexafluoro-2-butene and 75 to 5 wt% of 1,1,1,3,3,-pentafluoropropane.

This disclosure also provides a closed-cell polyurethane or polyisocyanurate polymer foam prepared from the reaction of an effective amount of the foam-forming composition and a suitable polyisocyanate.

This disclosure also provides a method for producing a closed-cell polyurethane or polyisocyanurate polymer foam. The method comprises reacting an effective amount of the foam-forming composition and a suitable polyisocyanate.

### DETAILED DESCRIPTION

The composition of this disclosure is a foam-forming composition comprising: (a) a mixture of cis-1,1,1,4,4,4-hexafluoro-2-butene (Z-FC-1336mzz, or Z-CF₃CH=CHCF₃) and 1,1,1,3,3-pentafluoropropane (HFC-245fa, or CF₃CH₂CF₂H); and (b) an active hydrogen-containing compound having two or more active hydrogens, in the form of hydroxyl groups, wherein the mixture contains 25 to 95 wt% of cis-1,1,1,4,4,4-hexafluoro-2-butene and 75 to 5 wt% of 1,1,1,3,3,-pentafluoropropane . In this disclosure, the mixture of Z-FC-1336mzz and HFC-245fa is used as a blowing agent. Typically these are combined prior to mixing with the other components in the foam-forming compositions. Alternatively, one can be mixed with some or all of the other components before the other is mixed in. For example, Z-FC-1336mzz can be first mixed with the other components in the foam-forming compositions before HFC-245fa is added in.

In the embodiments of this invention, the mixtures of Z-FC-1336mzz and HFC-245fa are not azeotrope-like.

In embodiments of this invention, the mixtures of Z-FC-1336mzz and HFC-245fa contain 25-95 wt% of Z-FC-1336mzz and 75-5 wt% of HFC-245fa.

Z-FC-1336mzz is a known compound, and its preparation method has been disclosed, for example, in U.S. Patent Application No. 60/926293 [FL1346 US PRV] filed April/26/2007.

By "cream time", it is meant to refer to the time period starting from the mixing of the active hydrogen-containing compound with
polyisocyanate, and ending at when the foaming starts to occur and color of the mixture starts to change.

By "rise time", it is meant to refer to the time period starting from the mixing of the active hydrogen-containing compound with polyisocyanate, and ending at when the foam rising stops.

By "tack free time", it is meant to refer to the time period starting from the mixing of the active hydrogen-containing compound with polyisocyanate, and ending at when the surface of the foam is no longer tacky.

By "initial R-value", it is meant to refer to the polymer foam's insulation value (thermal resistance) measured at a mean temperature of 24 °C (75 °F) within 24 hours after the foam is formed and becomes tack free.

As recognized in the art, an azeotropic or an azeotrope-like mixture is an admixture of two or more different components which, when in liquid form under a given pressure, will boil at a substantially constant temperature, which temperature may be higher or lower than the boiling temperatures of the individual components, and which will provide a vapor composition essentially identical to the liquid composition undergoing boiling.

For the purpose of this discussion, an azeotrope-like mixture means a composition that behaves like an azeotrope (i.e., has constant boiling characteristics or a tendency not to fractionate upon boiling or evaporation). Thus, the composition of the vapor formed during boiling or evaporation is the same as or substantially the same as the original liquid composition. Hence, during boiling or evaporation, the liquid composition, if it changes at all, changes only to a minimal or negligible extent. This is to be contrasted with non-azeotrope-like compositions in which during boiling or evaporation, the liquid composition changes to a substantial degree.

Additionally, azeotrope-like compositions exhibit dew point pressure and bubble point pressure with virtually no pressure differential. That is to say that the difference in the dew point pressure and bubble point
pressure at a given temperature will be a small value. In this invention, compositions with a difference in dew point pressure and bubble point
pressure of less than or equal to 3 percent (based upon the bubble point pressure) is considered to be azeotrope-like.

Accordingly, the essential features of an azeotropic or an azeotrope-like composition are that at a given pressure, the boiling point of the liquid composition is fixed and that the composition of the vapor above the boiling composition is essentially that of the boiling liquid composition (i.e., no fractionation of the components of the liquid composition takes place). It is also recognized in the art that both the boiling point and the weight percentages of each component of the azeotropic composition may change when the azeotropic or azeotrope-like liquid composition is subjected to boiling at different pressures. Thus, an azeotropic or an azeotrope-like composition may be defined in terms of the unique relationship that exists among the components or in terms of the compositional ranges of the components or in terms of exact weight percentages of each component of the composition characterized by a fixed boiling point at a specified pressure. It is also recognized in the art that various azeotropic compositions (including their boiling points at particular pressures) may be calculated (see, e.g., W. Schotte Ind. Eng. Chem. Process Des. Dev. (1980) 19, 432-439). Experimental identification of azeotropic compositions involving the same components may be used to confirm the accuracy of such calculations and/or to modify the calculations at the same or other temperatures and pressures.

The active hydrogen-containing compounds of this invention can comprise compounds having two or more groups that contain an active hydrogen atom reactive with an isocyanate group, such as described in U.S. Patent No. 4,394,491. Examples of such compounds have at least two hydroxyl groups per molecule, and more specifically comprise polyols, such as polyether or polyester polyols. Examples of such polyols are those which have an equivalent weight of 50 to 700, normally of 70 to 300, more typically of 90 to 270, and carry at least 2 hydroxyl groups, usually 3 to 8 such groups.

Examples of suitable polyols comprise polyester polyols such as aromatic polyester polyols, e.g., those made by transesterifying polyethylene terephthalate (PET) scrap with a glycol such as diethylene glycol, or made by reacting phthalic anhydride with a glycol. The resulting polyester polyols may be reacted further with ethylene - and/or propylene oxide - to form an extended polyester polyol containing additional internal alkyleneoxy groups.

Examples of suitable polyols also comprise polyether polyols such as polyethylene oxides, polypropylene oxides, mixed polyethylene-propylene oxides with terminal hydroxyl groups, among others. Other suitable polyols can be prepared by reacting ethylene and/or propylene oxide with an initiator having 2 to 16, generally 3 to 8 hydroxyl groups as present, for example, in glycerol, pentaerythritol and carbohydrates such as sorbitol, glucose, sucrose and the like polyhydroxy compounds. Suitable polyether polyols can also include aliphatic or aromatic amine-based polyols. Suitable polyether polyols can also include Mannich base polyether polyols.

The present invention also relates to processes for producing a closed-cell polyurethane or polyisocyanurate polymer foam by reacting an effective amount of the foam-forming compositions with a suitable polyisocyanate.

Typically, before reacting with a suitable polyisocyanate, the active hydrogen-containing compound described hereinabove and optionally other additives are mixed with the blowing agent (e.g., a mixture of Z-FC-1336mzz and HFC-245fa) to form a foam-forming composition. Such foam-forming composition is typically known in the art as an isocyanate-reactive preblend, or B-side composition. The foam-forming composition of this invention can be prepared in any manner convenient to one skilled in this art, including simply weighing desired quantities of each component and, thereafter, combining them in an appropriate container at appropriate temperatures and pressures.

When preparing polyisocyanate-based foams, the polyisocyanate reactant is normally selected in such proportion relative to that of the active hydrogen-containing compound that the ratio of the equivalents of isocyanate groups to the equivalents of active hydrogen groups, i.e., the foam index, is from 0.9 to 10 and in most cases from 1 to 4.

While any suitable polyisocyanate can be employed in the instant process, examples of suitable polyisocyanates useful for making polyisocyanate-based foam comprise at least one of aromatic, aliphatic and cycloaliphatic polyisocyanates, among others. Representative members of these compounds comprise diisocyanates such as meta- or paraphenylene diisocyanate, toluene-2,4-diisocyanate, toluene-2,6-diisocyanate, hexamethylene-1,6-diisocyanate, tetramethylene-1,4-diisocyanate, cyclohexane-1,4-diisocyanate, hexahydrotoluene diisocyanate (and isomers), napthylene-1,5-diisocyanate, 1-methylphenyl-2,4-phenyldiisocyanate, diphenylmethane-4,4-diisocyanate, diphenylmethane-2,4-diissocyanate, 4,4 - biphenylenediisocyanate and 3,3-dimethyoxy-4,4 biphenylenediisocyanate and 3,3-dimethyldiphenylpropane-4,4-diisocyanate; triisocyanates such as toluene-2,4,6-triisocyanate and polyisocyanates such as 4,4 - dimethyldiphenylmethane-2,2,5,5-tetraisocyanate and the diverse polymethylenepoly-phenylopolyisocyanates, mixtures thereof, among others.

A crude polyisocyanate may also be used in the practice of this invention, such as the crude toluene diisocyanate obtained by the phosgenating a mixture comprising toluene diamines, or the crude diphenylmethane diisocyanate obtained by the phosgenating crude diphenylmethanediamine. Specific examples of such compounds comprise methylene-bridged polyphenylpolyisocyanates, due to their ability to crosslink the polyurethane.

It is often desirable to employ minor amounts of additives in preparing polyisocyanate-based foams. Among these additives comprise one or more members from the group consisting of catalysts, surfactants, flame retardants, preservatives, colorants, antioxidants, reinforcing agents, filler, antistatic agents, among others well known in this art.

Depending upon the composition, a surfactant can be employed to stabilize the foaming reaction mixture while curing. Such surfactants normally comprise a liquid or solid organosilicone compound. The
surfactants are employed in amounts sufficient to stabilize the foaming reaction mixture against collapse and to prevent the formation of large, uneven cells. In one embodiment of this invention, 0.1% to 5% by weight of surfactant based on the total weight of all foaming ingredients (i.e. blowing agents + active hydrogen-containing compounds + polyisocyanates + additives) are used. In another embodiment of this invention, 1.5% to 3% by weight of surfactant based on the total weight of all foaming ingredients are used.

One or more catalysts for the reaction of the active hydrogen-containing compounds, e.g. polyols, with the polyisocyanate may be also employed. While any suitable urethane catalyst may be employed, specific catalysts comprise tertiary amine compounds and organometallic compounds. Exemplary such catalysts are disclosed, for example, in U.S. Patent No. 5,164,419. For example, a catalyst for the trimerization of polyisocyanates, such as an alkali metal alkoxide, alkali metal carboxylate, or quaternary amine compound, may also optionally be employed herein. Such catalysts are used in an amount which measurably increases the rate of reaction of the polyisocyanate. Typical amounts of catalysts are 0.1% to 5% by weight based on the total weight of all foaming ingredients.

In the process of the invention for making a polyisocyanate-based foam, the active hydrogen-containing compound (e.g. polyol), polyisocyanate and other components are contacted, thoroughly mixed, and permitted to expand and cure into a cellular polymer. The mixing apparatus is not critical, and various conventional types of mixing head and spray apparatus are used. By conventional apparatus is meant apparatus, equipment, and procedures conventionally employed in the preparation of isocyanate-based foams in which conventional isocyanate-based foam blowing agents, such as fluorotrichloromethane (CCl₃F, CFC-11), are employed. Such conventional apparatuses are discussed by: H. Boden et al. in chapter 4 of the Polyurethane Handbook, edited by G. Oertel, Hanser Publishers, New York, 1985; a paper by H. Grunbauer et al. titled "Fine Celled CFC-Free Rigid Foam - New Machinery with Low Boiling Blowing Agents" published in Polyurethanes 92 from the Proceedings of the SPI 34th Annual Technical/Marketing Conference, October 21-October 24, 1992, New Orleans, Louisiana; and a paper by M. Taverna et al. titled "Soluble or Insoluble Alternative Blowing Agents? Processing Technologies for Both Alternatives, Presented by the Equipment Manufacturer", published in Polyurethanes World Congress 1991 from the Proceedings of the SPI/ISOPA September 24-26, 1991, Acropolis, Nice, France.

In one embodiment of this invention, a preblend of certain raw materials is prepared prior to reacting the polyisocyanate and active hydrogen-containing components. For example, it is often useful to blend the polyol(s), blowing agent, surfactant(s), catalysts(s) and other foaming ingredients, except for polyisocyanates, and then contact this blend with the polyisocyanate. Alternatively, all the foaming ingredients may be introduced individually to the mixing zone where the polyisocyanate and polyol(s) are contacted. It is also possible to pre-react all or a portion of the polyol(s) with the polyisocyanate to form a prepolymer.

The invention composition and processes are applicable to the production of all kinds of expanded polyurethane foams, including, for example, integral skin, RIM and flexible foams, and in particular rigid closed-cell polymer foams useful in spray insulation, as pour-in-place appliance foams, or as rigid insulating board stock and laminates.

The present invention also relates to the closed-cell polyurethane or polyisocyanurate polymer foams prepared from reaction of effective amounts of the foam-forming composition of this disclosure and a suitable polyisocyanate.

### EXAMPLES

The present disclosure is further defined in the following Examples. It should be understood that these Examples, while indicating preferred embodiments, are given by way of illustration only. From the above discussion and these Examples, one skilled in the art can ascertain the preferred features, and without departing from the spirit and scope thereof, can make various changes and modifications to adapt it to various uses and conditions.

Polyol A is a Mannich base polyether polyol (JEFFOL 315X) from Huntsman Polyurethanes at West Deptford, NJ 08066-1723. Polyol A has viscosity of 2400 centerpoise at 25 °C. The content of hydroxyl groups in the Polyol is equivalent to 336 mg KOH per gram of the Polyol.

Polyol B is a polyester polyol (Terate 2031) from Invista Polyurethanes at Wichita, KS 67220. Polyol B has viscosity of 10,000 centerpoise at 25 °C. The content of hydroxyl groups in the Polyol is equivalent to 307 mg KOH per gram of the Polyol.

Polyol C is a toluene diamine (o-TDA) initiated aromatic polyether polyol (VORANOL 391) purchased from Dow Chemicals Inc. at Midland, MI, 49641-1206. Polyol has viscosity of 4740 centerpoise at 25 °C. The content of hydroxyl groups in the Polyol is equivalent to 391 mg KOH per gram of Polyol.

Surfactant A (DABCO DC193) is polysiloxane purchased from Air Products Inc. at 7201 Hamilton Blvd, Allentown PA 18195.

Surfactant B is a silicon type surfactant which is a mixture of 70% polyalkyleneoxidemethylsiloxane and 30% polyalkylene oxide (Niax Silicone L-5440) purchased from Momentive Performance Materials at 187 Danbury Road, Wilton, CT 06897 USA.

Blowing agent enhancer (Dabco PM300) is 2-butoxyethanol purchased from Air Products Inc. at 7201 Hamilton Blvd, Allentown PA 18195.

Amine catalyst A (Polycat 30) is tertiary amine purchased from Air Products Inc. at 7201 Hamilton Blvd, Allentown PA 18195.

Amine catalyst B (Polycat 8) is N,N-dimethylcyclohexylamine purchased from Air Products Inc. at 7201 Hamilton Blvd, Allentown PA 18195.

Potassium catalyst (Potassium HEX-CEM 977) contains 25 wt% diethylene glycol and 75 wt% potassium 2-ethylhexanoate purchased from OMG Americas Inc. at 127 Public Square, 1500 Key Tower, Cleveland OH 44114.

Co-catalyst (Curithane 52) is 2-methyl(n-methyl amino b-sodium acetate nonyl phenol) purchased from Air Products Inc. at 7201 Hamilton Blvd, Allentown PA 18195.

Fire retardant (PUMA 4010) is tris-(1-chloro-2-propyl) phosphate (TCPP) purchased from ExpoMix Corporation at Wauconda, IL 60084.

Polymethylene polyphenyl isocyanate (PAPI 27) is purchased from Dow Chemicals, Inc. at Midland, MI, 49641-1206.

Initial R-value is measured by a LaserComp FOX 304 Thermal Conductivity Meter at a mean temperature of 24 °C (75 °F). The unit of R-value is ft²-hr-°F/BTU-in.

### COMPARATIVE EXAMPLE 1

### Polyurethane Foam Made from HFC-245fa

Polyols, surfactant, catalysts, water and the blowing agent (HFC-245fa) were pre-mixed by hand and then mixed with polyisocyanate. HFC-245fa has a boiling point of 15.2 °C at 1 atmosphere. The resulting mixture was poured into a 20.32 cm x 20.32 cm x 6.35 cm (8"x8"x2.5") paper box to form the polyurethane foam. The formulation and properties of the foam are shown in Tables 1 and 2 below.

**Table 1 Polyurethane formulation using HFC-245fa**

| Component | Parts by weight |
|---|---|
| Polyol A | 50 |
| Polyol B | 50 |
| Surfactant A | 0.25 |
| Blowing agent enhancer | 3.00 |
| Fire retardant | 21.5 |
| Amine catalyst A | 0.97 |
| Potassium catalyst | 0.25 |
| Water | 0.63 |
| Blowing agent (HFC-245fa) | 24 |
| Polymethylene polyphenyl isocyanate | 97 |

**Table 2. Polyurethane foam properties using HFC-245fa**

| | |
|---|---|
| Foam Index | 1.1 |
| Cream time(seconds) | 7 |
| Rise time (seconds) | 85 |
| Tack free time(seconds) | 90 |
| Foam density (g/cm³ [pounds-per-cubic-feet]) | 0.0407 [2.54] |
| Initial R-value (ft²-hr-°F/BTU-in) | 7.2 |

### COMPARATIVE EXAMPLE 2

### Polyurethane Foam Made from Z-FC-1336mzz

Polyols, surfactant, catalysts, water and the blowing agent (Z-FC-1336mzz) were pre-mixed by hand and then mixed with polyisocyanate. Z-FC-1336mzz has a boiling point of 33.4 °C at 1 atmosphere. The resulting mixture was poured into a 20.32 cm x 20.32 cm x 6.35 cm (8"x8"x2.5") paper box to form the polyurethane foam. The formulation and properties of the foam are shown in Tables 3 and 4 below.

**Table 3 Polyurethane formulation using Z-FC-1336mzz**

| Component | Parts by weight |
|---|---|
| Polyol A | 50 |
| Polyol B | 50 |
| Surfactant A | 0.25 |
| Blowing agent enhancer | 3.00 |
| Fire retardant | 21.5 |
| Amine catalyst A | 0.97 |
| Potassium catalyst | 0.25 |
| Water | 0.63 |
| Blowing agent (Z-FC-1336mzz) | 29.4 |
| Polymethylene polyphenyl isocyanate | 97 |

**Table 4. Polyurethane foam properties using Z-FC-1336mzz**

| | |
|---|---|
| Foam Index | 1.1 |
| Cream time(seconds) | 7 |
| Rise time (seconds) | 71 |
| Tack free time(seconds) | 85 |
| Foam density (g/cm³ [pounds-per-cubic-feet]) | 0.0442 [2.76] |
| Initial R-value (ft-hr-°F/BTU-in) | 7.7 |

### EXAMPLE 1

### Polyurethane Foam Made from the Mixture of 50 wt% Z-FC-1336mzz and 50 wt% HFC-245fa

Blowing agents Z-FC-1336mzz and HFC-245fa were premixed to form a mixture containing 50 wt% of Z-FC-1336mzz and 50 wt% of HFC-245fa. The blowing agent mixture has the boiling point of 20.4 °C at 1 atmosphere.

Polyols, surfactant, catalysts, water and the blowing agent (50 wt% of HFC-245fa and 50 wt% of Z-FC-1336mzz) were pre-mixed by hand and then mixed with polyisocyanate. The resulting mixture was poured into a 20.32 cm x 20.32 cm x 6.35 cm (8"x8"x2.5") paper box to form the polyurethane foam. The formulation and properties of the foam are shown in Tables 5 and 6 below.

**Table 5 Polyurethane formulation using the mixture of 50 wt% FC-1336mzz and 50 wt% HFC-245fa**

| Component | Parts by weight |
|---|---|
| Polyol A | 50 |
| Polyol B | 50 |
| Surfactant A | 0.25 |
| Blowing agent enhancer | 3.00 |
| Fire retardant | 21.5 |
| Amine catalyst A | 0.97 |
| Potassium catalyst | 0.25 |
| Water | 0.63 |
| Blowing agent (50 wt% Z-FC-1336mzz and 50 wt% HFC-245fa) | 26.4 |
| Polymethylene polyphenyl isocyanate | 97 |

**Table 6. Polyurethane foam properties using the mixture of 50 wt% FC-1336mzz and 50 wt% HFC-245fa**

| | |
|---|---|
| Foam Index | 1.1 |
| Cream time(seconds) | 7 |
| Rise time (seconds) | 69 |
| Tack free time(seconds) | 90 |
| Foam density (g/cm³ [pounds-per-cubic-feet]) | 0.0474 [2.96] |
| Initial R-value (ft²-hr-°F/BTU-in) | 7.6 |

### EXAMPLE 2

### Polyurethane Foam Made from the Mixture of 83 wt% Z-FC-1336mzz and 17 wt% HFC-245fa

Blowing agents Z-FC-1336mzz and HFC-245fa were pre-mixed to form a mixture containing 83 wt% of Z-FC-1336mzz and 17 wt% of HFC-245fa. The blowing agent mixture has the boiling point of 26.9 °C at 1 atmosphere.

Polyols, surfactant, catalysts, water and the blowing agent (17 wt% of HFC-245fa and 83 wt% of Z-FC-1336mzz) were pre-mixed by hand and then mixed with polyisocyanate. The resulting mixture was poured into a 20.32 cm x 20.32 cm x 6.35 cm (8"x8"x2.5") paper box to form the polyurethane foam. The formulation and properties of the foam are shown in Tables 7 and 8 below.

**Table 7 Polyurethane formulation using the mixture of 83 wt% FC-1336mzz and 17 wt% HFC-245fa**

| Component | Parts by weight |
|---|---|
| Polyol A | 50 |
| Polyol B | 50 |
| Surfactant A | 0.25 |
| Blowing agent enhancer | 3.00 |
| Fire retardant | 21.5 |
| Amine catalyst A | 0.97 |
| Potassium catalyst | 0.25 |
| Water | 0.63 |
| Blowing agent (83 wt% Z-FC-1336mzz and 17 wt% HFC-245fa) | 28.3 |
| Polymethylene polyphenyl isocyanate | 97 |

**Table 8. Polyurethane foam properties using the mixture of 83 wt% FC-1336mzz and 17 wt% HFC-245fa**

| | |
|---|---|
| Foam Index | 1.1 |
| Cream time(seconds) | 7 |
| Rise time (seconds) | 75 |
| Tack free time(seconds) | 80 |
| Foam density (g/cm³ [pounds-per-cubic-feet]) | 0.0471 [2.94] |
| Initial R-value (ft²-hr-°F/BTU-in) | 7.7 |

### COMPARATIVE EXAMPLE 3

### Polyurethane Foam Made from Z-FC-1336mzz and HFC-245fa Azeotrope-like Mixture

Blowing agents Z-FC-1336mzz and HFC-245fa were premixed to form an azeotrope-like mixture containing 20 wt% of Z-FC-1336mzz and 80 wt% of HFC-245fa.

Polyol, surfactant, catalysts, water and the blowing agent (80 wt% of HFC-245fa and 20 wt% of Z-FC-1336mzz) were pre-mixed by hand and then mixed with polyisocyanate. The resulting mixture was poured into a 20.32 cm x 20.32 cm x 6.35 cm (8"x8"x2.5") paper box to form the polyurethane foam. The formulation and properties of the foam are shown in Tables 9 and 10 below.

**Table 9 Polyurethane formulation**

| Component | Parts by weight |
|---|---|
| Polyol C | 100 |
| Surfactant B | 2.0 |
| Amine catalyst B | 1.5 |
| Co-catalyst | 0.5 |
| Water | 1.0 |
| Blowing agent (20 wt% of Z-FC-1336mzz and 80 wt% of HFC-245fa) | 25.0 |
| Polymethylene polyphenyl isocyanate | 132 |

**Table 10. Polyurethane foam properties**

| | |
|---|---|
| Foam Index | 1.2 |
| Cream time(seconds) | 7 |
| Rise time (seconds) | 90 |
| Tack free time(seconds) | 90 |
| Foam density (g/cm³ [pounds-per-cubic-feet]) | 0.038 [2.4] |
| Initial R-value (ft²-hr-°F/BTU-in) | 7.1 |

## Claims

1. A foam-forming composition comprising:
(a) a mixture of cis-1,1,1,4,4,4-hexafluoro-2-butene and 1,1,1,3,3-pentafluoropropane; and
(b) an active hydrogen-containing compound having two or more active hydrogens, wherein the mixture contains 25 to 95 ut% of cis-1,1,1,4,4,4-hexafluoro-2-butene and 75 to 5 wt% of 1,1,1,3,3-pentafluoropropane.

2. The foam-forming composition of claim 1 wherein said active hydrogen-containing compound is a polyether polyol.

3. The foam-forming composition of claim 2 wherein said polyether polyol is a Mannich base polyether polyol.

4. The foam-forming composition of claim 1 wherein said active hydrogen-containing compound is a mixture of polyether polyol and polyester polyol.

5. A closed-cell polyurethane or polyisocyanurate polymer foam prepared from reaction of an effective amount of the foam-forming composition of claim 1 with a suitable polyisocyanate.

6. The closed-cell polyurethane or polyisocyanurate polymer foam of claim 5 wherein said polymer foam has an initial R-value greater than 7.0 ft²-hr-°F/BTU-in.

7. A process for producing a closed-cell polyurethane or polyisocyanurate polymer foam comprising: reacting an effective amount of the foam-forming composition of claim 1 with a suitable polyisocyanate.

## Patentansprüche

1. Schaumbildende Zusammensetzung umfassend:
(a) eine Mischung von cis-1,1,1,4,4,4-Hexafluor-2-buten und 1,1,1,3,3-Pentafluorpropan; und
(b) eine aktive wasserstoffhaltige Verbindung, die zwei oder mehr aktive Wasserstoffe aufweist,
wobei die Mischung 25 bis 95 Gew.-% cis-1,1,1,4,4,4-Hexafluor-2-buten und 75 bis 5 Gew.-% 1,1,1,3,3-Pentafluorpropan enthält.

2. Schaumbildende Zusammensetzung nach Anspruch 1, wobei die aktive wasserstoffhaltige Verbindung ein Polyetherpolyol ist.

3. Schaumbildende Zusammensetzung nach Anspruch 2, wobei das Polyetherpolyol ein Mannichbase-Polyetherpolyol ist.

4. Schaumbildende Zusammensetzung nach Anspruch 1, wobei die aktive wasserstoffhaltige Verbindung eine Mischung von Polyetherpolyol und Polyesterpolyol ist.

5. Geschlossenzelliger Polyurethan- oder Polyisocyanurat-Polymerschaumstoff, der durch die Reaktion einer wirksamen Menge der schaumbildenden Zusammensetzung nach Anspruch 1 mit einem geeigneten Polyisocyanat hergestellt wird.

6. Geschlossenzelliger Polyurethan- oder Polyisocyanurat-Polymerschaumstoff nach Anspruch 5, wobei der Polymerschaumstoff einen anfänglichen R-Wert von mehr als 7,0 Quadratfuß-h-°F/BTU-Zoll aufweist.

7. Verfahren für die Herstellung eines geschlossenzelligen Polyurethan- oder Polyisocyanurat-Polymerschaumstoffs umfassend: das Reagieren einer wirksamen Menge der schaumbildenden Zusammensetzung nach Anspruch 1 mit einem geeigneten Polyisocyanat.

## Revendications

1. Composition de formation de mousse comprenant:
(a) un mélange de cis-1,1,1,4,4,4-hexafluoro-2-butène et de 1,1,1,3,3-pentafluoropropane; et
(b) un composé contenant de l'hydrogène actif ayant deux hydrogènes actifs ou plus,
le mélange contenant de 25 à 95 % en pds de cis-1,1,1,4,4,4-hexafluoro-2-butène et de 75 à 5 % en pds de 1,1,1,3,3-pentafluoropropane.

2. Composition de formation de mousse selon la revendication 1, ledit composé contenant de l'hydrogène actif étant du polyéther polyol.

3. Composition de formation de mousse selon la revendication 2, ledit polyéther polyol étant un polyéther polyol de Mannich.

4. Composition de formation de mousse selon la revendication 1, ledit composé contenant de l'hydrogène actif étant un mélange de polyéther polyol et de polyester polyol.

5. Mousse polymère de polyuréthane ou de polyisocyanurate à alvéoles fermées préparée à partir de la réaction d'une quantité efficace de la composition de formation de mousse selon la revendication 1 avec un polyisocyanate approprié.

6. Mousse polymère de polyuréthane ou de polyisocyanurate à alvéoles fermées selon la revendication 5, ladite mousse polymère ayant une valeur R initiale supérieure à 7,0 pi²-h-°F/BTU-po.

7. Procédé de production de mousse polymère de polyuréthane ou de polyisocyanurate à alvéoles fermées comprenant: la réaction d'une quantité efficace de la composition de formation de mousse selon la revendication 1 avec un polyisocyanate approprié.
